# EUROPEAN PATENT SPECIFICATION

(11) **EP 1 574 130 B1**
(45) Date of publication and mention of the grant of the patent: **07.03.2007**
(21) Application number: 05100206.1
(22) Date of filing: 14.01.2005
(51) Int. Cl.: A01K 1/04, A01K 15/02

(54) **Device for exercising an animal**
Vorrichtung zum Ausführen von einem Tier
Dispositif d'exercice pour un animal

(30) Priority: 16.01.2004 FI 20040054
(43) Date of publication of application: 14.09.2005
(73) Proprietor: Halonen, Tauno, 24240 Salo (FI)
(72) Inventor: Halonen, Tauno, 24240 Salo (FI)
(74) Representative: Suominen, Kaisa Liisa

(56) References cited:
- DE-U1- 20 306 243
- US-A- 4 134 364
- US-A- 4 854 269
- US-A- 5 033 409
- US-A- 5 215 037
- US-A- 6 148 772

## Description

The object of the invention is a device for exercising an animal and a secure locking means suitable for the exercising device presented in the preambles of the independent claims presented below.

Pets, such as dogs, need exercise and motion. This need is accentuated especially in the cities and densely populated areas, where animals cannot be kept in large enough outdoor pens built for them, nor can they be let to run free, but all exercise and fresh air that an animal needs is available only on the walks offered by the animal keeper.

For many, especially for larger animal species, exercising by walking is not sufficient exercise. However, all keepers are not able or do not bother to exercise the animal by running or jogging, whereby the animal would have the exercise it needs. Thus, a simple solution is to exercise the animal when bicycling, whereby the exercise does not excessively exhaust the keeper but gives the animal the exercise it needs.

Bicycling with an animal involves, however, many risk factors. If an animal is exercised in a leash that the bicycler holds in his hand, sudden movements, stops or directional changes of the animal easily cause the bicycler to loose his balance and his falling down. In order to prevent this from happening, the bicycler is forced to release his hold of the leash, whereby the animal is let loose and might run away.

Animal leash can also be tied to the bicycle, but sudden twitches caused by the animal are thus only emphasized, and keeping up the balance when bicycling only becomes more difficult. When the animal suddenly stops, the leash can also tighten with violence, whereby a sudden strangulation may cause severe damages to the animal. There is also a risk that the animal leash gets entangled with the paddles, spokes of wheel or chain, thereby creating considerable dangerous situations both for the exerciser and the animal.

The publication US 4,854,269 discloses a device for exercising dogs by a bicycle. The device comprises an elastic spring or a bar, which is attached to the bicycle frame with attachment means.

It is an object of the present invention to diminish the known problems of exercising a pet.

It is a further object of the present invention to make it possible to exercise animals safely by using a vehicle, such as a bicycle.

It is also an object of the invention to reduce the effect of the motion impulses, which are caused by the animal, on the controllability of the vehicle, such as a bicycle.

Yet another object of the invention is to prevent violent tightening of the leash caused by a sudden motion impulse, and severe damages it causes to the animal.

In order to realise for instance the above mentioned objects, the device according to the invention is mainly characterised by what is presented in the characterising parts of the enclosed independent claims.

Typical device for exercising an animal comprises an attachment body, which is attachable to a vehicle, such as a bicycle, and a lower arm, which is detachably attached to the attachment body by means of an attachment means. Typical exercising device further comprises a lever arm, which is attached by its first end to the lower arm in an articulated manner by means of a joint, which joint is arranged to enable movement of the lever arm in parallel with the vehicle. The lever arm and the lower arm are in connection with each other via the main spring, by means of which main spring mutual movement of the lower arm and the lever arm in relation to the joint is limited.

Typical secure locking means for the exercising device according to the invention comprises a body part of the locking means, such as a friction bush, which has an elongated cavity made of material with high friction coefficient, such as rubber, and a coil case which has an elongated bracket, whereby the elongated bracket of the coil case is fitted to the locking means, into the elongated cavity of the body part, preferably all the way to the bottom of the cavity.

The present invention is suitable for exercising middle sized animals, such as dogs, miniature ponies, miniature pigs or the like by means of a vehicle, such as a bicycle or a motorcycle.

By means of the present invention, it is possible to reduce or entirely prevent pulling and twitching of the dog that is to be exercised by means of a bicycle or the like. The device facilitates exercising of an animal, and the exerciser can concentrate on the taken route and on observing other traffic. The device according to the invention provides a possibility to adjust the strength suppressing the motion in relation to the size and/or strength of the animal to be exercised.

The device according to the invention stretches in a three phase manner in the pulling direction of the animal being exercised. When the counter force grows, the device suppresses pulling and twitching of the animal even more efficiently. Spring assembly of the device suppresses the twitches caused by the animal in all directions.

The main spring of the exercising device suppresses strong motion impulses caused by the animal. In one exercising device according to the invention the main spring is adjustable. The heavier and/or stronger animal is concerned, the higher the main spring in the lever arm is adjusted. This makes the spring assembly more rigid, and the device suppresses possible twitches of the animal more efficiently.

According to one embodiment of the invention, the exercising device may also comprise a light pull counter spring, which suppresses smaller motion impulses caused by the animal. When the counter spring is stretched to its maximum, the main spring functions in the pulling direction. This way fast movements and sudden stops of the animal can be slowed down by the spring assembly.

In an advantageous embodiment of the invention, the device is mounted as low as possible in a vehicle, whereby a supporting point of the device in relation to the vehicle is brought as low as possible. Thus, mass of the exerciser and the vehicle effects against the mass of the animal to be exercised. The device can advantageously be mounted under a mounting screw of the bicycle's rear axle, for example, whereby the device is as low as possible in the supporting point. Due to this, the exerciser can best resist a possible twitch caused by the animal, and sudden movements of the animal do not affect on the controllability of the bicycle in the same manner as if the animal leash was in a hand of the bicyclist during the bicycling.

In one embodiment of the invention, length of the lever arm of the exercising device is adjustable, for example with a v-shaped spring. When the lever arm is adjusted as short as possible, it is possible to run a lighter and/or less strong animal, because the spring assembly functions more sensitively.

In the secure locking means according to the invention, the locking force can be adjusted by means of a friction according to the weight and/or strength of the animal to be exercised. The secure locking means enables the animal to disengage from the exercising device in case of a sudden obstacle or stop, whereby the health of the animal is not endangered as a result of a sudden stop.

In an embodiment according to the invention, the secure locking means comprises a coil case and a coil of wire. Wire is rolled up into the coil of wire, coiling out of which wire can be adjusted according to the strength and/or weight of the animal. The heavier and/or stronger the animal is, the greater force is needed to coil out the wire. The wire is attached to the axle of the coil case and to the body part of the locking means. When the motion impulse caused by the animal is strong enough, the secure locking means opens, and the body part of the secure locking means and the coil case are disconnected from each other. After the secure locking means has opened, the animal is disengaged from the exercising device, but it is still attached to the end of the wire, and is therefore under control in the exercising situation.

In one preferred embodiment of the invention, an electric circuit is mounted in the secure locking means, to which electric circuit a loudspeaker and a power supply is coupled. When the mechanism of the secure locking means opens, the electric circuit closes and the secure locking means gives a sound signal to indicate that the animal has got disengaged. Also means for producing a call voice can be attached to the secure locking means, that is secure lock, or to the exercising device. By means of the call voice, the animal can be called to return after it has got disengaged from the exercising device.

The above described signal producing system can be arranged into the secure locking means in several different ways. Signal, which can be a voice or a light or the like, can be produced by means of an electric circuit, magnetic sensor system or the like method that is suitable for purpose.

In the following, the invention will be described in more detail with reference to the appended drawings, in which
- Fig. 1: shows schematically an embodiment of the exercising device according to the invention,
- Fig. 2A: shows schematically an embodiment of the secure locking means according to the invention seen from the side,
- Fig. 2B: shows schematically an embodiment of the secure locking means according to the invention seen from above,

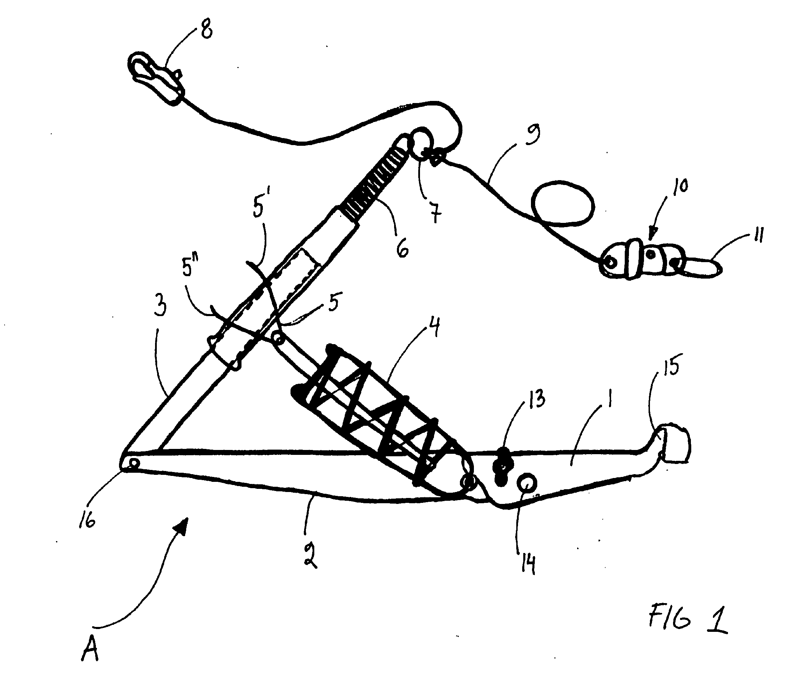

Fig. 1 shows schematically an example of a device for exercising an animal. Exercising device A comprises an attachment body 1, which can be attached to a rear axle of the bicycle with a mounting screw through an aperture 14. That is, the attachment body 1 is attached in parallel with the bicycle frame. The device A has a fork 15 with the shape of C or the like, to which fork a tube of the rear cycle fork, not shown in the figure, is placed. The fork 15 prevents the attachment body 1 from moving in regard to the bicycle. The attachment body 1 can be mounted so that, for example, the C-shaped support fork 15 is mounted around the tube of the lower rear cycle fork. Thus, the attachment body 1 cannot substantially move in vertical direction in regard with the bicycle frame.

The lower bar 2 of the device A is attached to the attachment body 1 by means of a quick fastening means 13, such as a leaf nut or the like. However, the fastening means 13 is not necessarily strong enough to hold the attachment body 1 and the lower bar 2 in the same line, that is in the line defined by the bicycle frame. The attachment body 1 may have a locking fit, not shown in the figure, for preventing the lower bar 2 from moving under the attachment. The locking fit can be, for example, a guide pin, by means of which the attachment body and the lower bar can be attached to each other in such a manner, that vertical movement of the lower bar is prevented. By means of the fastening means 13, however, the exercising device A can easily be detached from the bicycle when it is not in use, and, respectively, it can quickly be mounted back to the bicycle when needed.

The lever arm 3 of the device A is attached to the lower bar 2 by the lower end of the lever arm 3 in an articulated manner by means of a joint 16. Due to the joint 16, the lever arm can move forward and backward in the travelling direction of the bicycle. The lower bar 2 can be attached to the lever arm 3 also in another corresponding manner, for example by means of a rivet, which enables movement of the lever arm 3 in relation to the lower bar 2.

Main spring 4 of the device A is in connection with the lever arm 3 and the lower bar 2. The main spring 4 suppresses reciprocating movement of the lever arm 3. By means of the adjustment lock 5, position of the main spring 4 on the lever arm 3 can be adjusted. The adjustment lock 5 can be a v-angled spring having an outwards directed spring force, for example. When the ends 5', 5" of the v-angled spring functioning as the adjustment lock 5 are pressed towards each other, inlet apertures of the tube, not shown in the figure, are opened, and the adjustment lock 5 is released, which makes it possible to adjust the length of the lever arm 3. When the adjustment lock 5 is adjusted close to the joint 16, i.e. the lever arm is as short as possible, the lever arm 3 moves with less force, whereby a smaller and/or less strong animal can be exercised. Respectively, when the adjustment lock 5 is adjusted to its maximum upper position, a greater force is needed to move the lever arm 3, whereby a bigger and/or stronger animal can be exercised.

A light pull counter spring 6, which suppresses small pulls and twitches of the animal, is at the upper end of the lever arm 3. When the counter spring 6 is in its maximum tension, the main spring 4 functions in the pulling direction. This way, the springing can slow down fast movements and sudden stops of the animal. If the animal causes such a strong pull or twitch that the counter spring 6 and the main spring 4 are stressed to their maximum position, the lower bar 2 of the device twists in the pulling or twitching direction, i.e. the lower bar 2 of the device A provides even extra flexibility in this case. The lower bar is able to twist via its central axle similarly to a plate-like torsion bar spring. When an animal causes a strong pull at the end of the lever arm, twisting angle grows in the direction of the horizontal axle of the lower bar. This way the flexibility provided by the device is in three phases, and the animal feels stopping motion as tight, but tender.

An adjustment ring 7 is attached to the counter spring 6, by means of which free length of a leash 9 can be adjusted. First end of the leash 9 can be attached to a carrier or the bicycle frame by a fastening 8. This way the animal is prevented from running away in case the mechanism of the device A breaks down or it comes loose.

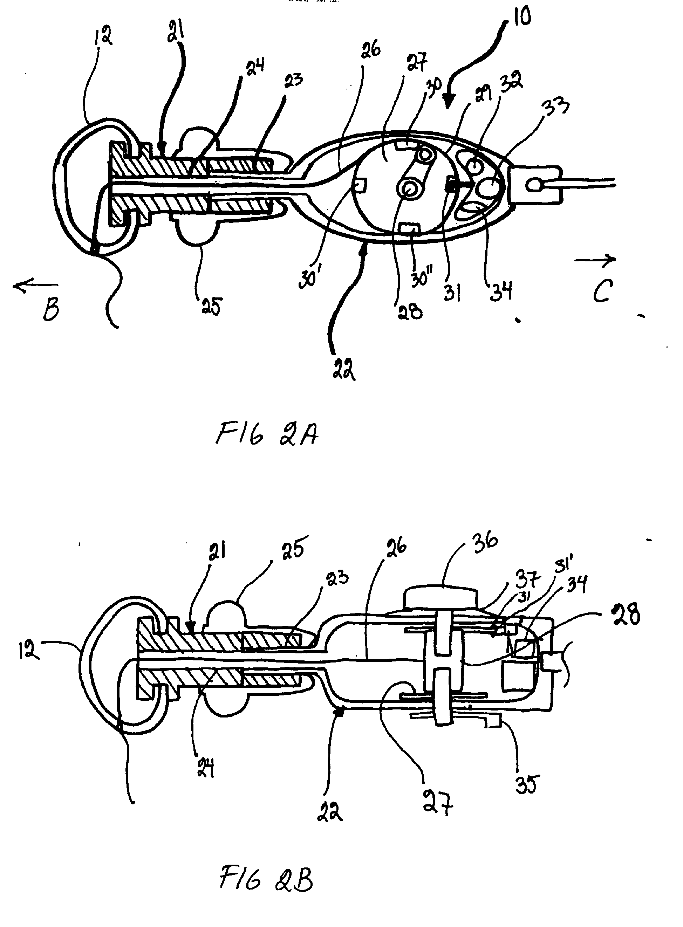

A secure locking means 10 is attached at the second end of the leash 9, structure of which secure locking means is described in more detail in the figures 2A and 2B. Fastening hook 11 of the secure locking means 10 is fastened to the collar of the animal to be exercised.

Figure 2A shows a schematical side view of the secure locking means 10 suitable to be used in the exercising device A according to the invention. The secure locking means 10 comprises a body part 21 of the locking means and a coil case 22. The body part 21 of the locking means and the coil case 22 are connected to each other so that the elongated bracket 23 of the coil case 22 is pushed into the elongated cavity 24 of the body part 21 of the secure locking means, preferably all the way to the bottom of the elongated cavity 24. The elongated cavity 24 is tightened by means of a tightening means 25 of the locking means's body part 21, for example by a fly sleeve nut. Also holding force for the coil case 22 can be adjusted by means of the tightening means 25. Accordingly, holding force can be adjusted by the tightening means 25, according to the strength and/or weight of the animal.

The secure locking means 10 serves as a safety element when motion impulses of the forces B and C exceed certain limiting values. When forces B and C coming from the pulling directions are so strong, that limiting value for the friction between the walls of the elongated bracket 23 of the coil case 22 and the elongated cavity 24 of the body part 21 is exceeded, the body part 21 and the coil case 22 are disconnected from each other, i.e. the secure locking means opens.

A fixed connection between the body part 21 of the locking means and the coil case 22 is arranged by a wire 26, which is rolled up to a coil 27 that is inside the coil case 22. The first end of the wire 26 is locked to the axel 28 of the coil 27 and the second end is locked to the leash loop 12 of the body part 21 of the locking means. The wire 26 is arranged to travel through the friction bush. The wire 26 prevents the coil case 22 and the body part 21 of the locking means from disconnecting totally from each other due to the influence of the forces B and C. The forces B and C being so strong, that the limiting value for the friction between the walls of the elongated bracket 23 of the coil case 22 and the elongated cavity 24 of the body part 21 has been exceeded, wire 26 is uncoiled from the coil 27. Thus, the wire 26 allows additional freedom of action as much as there is wire 26 in the coil 27.

In one embodiment according to the invention, the coil 27 has an electrically conductive edge 29, where a slot 30, 30', 30" is arranged. When the position of the coil 27 changes, location of the slot 30, 30', 30" changes, so that the tips of the electrodes 31, 31' that are arranged into the coil case 22 come into contact with each other, and connect an electric circuit comprising a loud speaker 32 and a power supply 33. Thereby a voice, that the hearer can sense, is created. When the voice is created, a clutch 34 is in "on" position, and it is switched to "off" position when the voice system of the secure locking means is not in use.

Figure 2B shows a schematical top view of the secure locking means 10 suitable to be used in the exercising device A according to the invention. Coiling up of the wire 26 can be carried out with a crank 35. On the other side of the crank 35, on the axel 28 of the coil 27, is placed an adjustment member 36, such as a screw, and a clutch plate 37, which is tightened at the same time as the crank 35 is held still. By means of the adjustment member 36 and the clutch plate 37 the coiling out speed of the wire 26 can be adjusted, depending on the pulling force of the animal to be exercised, for example. In the axel 28, torque grows, when the wire circle diminishes in the coil 27 when coming closer to the axel 28. Thus, progressive stopping for the forces is made possible. During the coiling up of the wire 26, the clutch 34 is being switched on the "off" position and the adjustment member 36 is kept released.

The exercising device according to the invention provides many advantages. Use of the exercising device according to the invention arranged in a bicycle makes it possible to pedal bicycle without interference, because the exercising device can be arranged to the bicycle within a sufficient distance from the bicycle pedals. Thereby the exercising device does not hit the feet of the bicyclist and cause dangerous situation.

It is not intended in any way to limit the invention only to the embodiments as presented above in the description, but it may be varied within the scope of the inventive idea presented in the claims.

## Claims

1. An exercising device comprising
- an attachment body (1) which is attachable to a vehicle, such as a bicycle,
- a lower bar (2), which is detachably attached to the attachment body (1) by an attachment means (13),
**characterized in that**
- the exercising device comprises a lever arm (3), which is attached by its first end to the lower arm (2) in an articulated manner by means of a joint (16), which joint is arranged to enable movement of the lever arm in parallel with the vehicle, and **in that**
- the lever arm (3) and the lower arm (2) are in connection with each other by means of a main spring (4), by means of which main spring relative movement of the lower arm and the lever arm in relation to the joint (16) is limited.

2. Exercising device according to claim 1, **characterized in that** the length of the lever arm (3) is adjustable with an adjustment lock (5), which is preferably a v-angled spring.

3. An exercising device according to claim 1, **characterized in that** a counter spring (6) is arranged at the second end of the lever arm.

4. An exercising device according to claim 1 or 3, **characterized in that** an adjustment ring (7) is attached at the second end of the lever arm (3) or into the counter spring (6) for adjusting free length of a leash (9) that travels via it.

5. An exercising device according to claim 1, **characterized in that** a secure locking means (10) is arranged at the second end of the leash (9) travelling via the adjustment ring (7), the secure lock means comprising
- a body part (21) of the locking means, such as a friction bush, which has an elongated cavity (24) made of material with high friction coefficient, such as rubber, and
- a coil case (22) which has an elongated bracket (23),
whereby the elongated bracket (23) of the coil case (22) is fitted to the locking means, into the elongated cavity (24) of the body part (21), preferably all the way to the bottom of the cavity.

6. An exercising device according to claim 5, **characterized in that** the elongated bracket (23) of the coil case (22) of the secure locking means is tightened to the locking means, into the elongated cavity (24) of the body part (21) by means of the tightening means (25), such as a fly sleeve nut.

7. An exercising device according to claim 6, **characterized in that** the amount of force needed for opening the secure locking means is adjustable by the tightening means (25).

8. An exercising device according to claim 5, **characterized in that** a wire (26) is rolled up to a coil (27) that is inside the coil case (22) of the secure locking means, a first end of which wire is attached to an axel (28) of the coil (27) and a second end is attached to the leash loop (12) of the body part (21).

9. An exercising device according to claim 8, **characterized in that** an adjustment means (36), such as a screw, and a clutch plate (37), is in connection with the axel (28) of the coil (27) of the secure locking means, by means of which adjustment means and clutch plate the speed of the coiling out of the wire (26) is adjustable.

10. An exercising device according to any of the preceding claims 5 - 9, **characterized in that** the coil (27) of the secure locking means has an electrically conductive edge (29), where a slot (30) is arranged, and that electrodes (31, 31') are arranged into the coil (27), tips of which electrodes come into contact with each other and interlock an electric circuit when the position of the coil (27) changes.

## Patentansprüche

1. Übungsgerät umfassend:
- einen Anhängekörper (1), der anhängbar an ein Fahrzeug ist, wie zum Beispiel ein Fahrrad;
- eine untere Schiene (2), die mittels einer Anhänge-Einheit (13) lösbar an dem Anhängekörper (1) angehängt ist,
**dadurch gekennzeichnet, dass**
- das Übungsgerät einen Hebelarm (3) umfasst, der mit seinem ersten Ende an den unteren Arm (2) mittels eines Gelenks (16) in einer beweglichen Weise angehängt ist, wobei dieses Gelenk angeordnet ist, um eine Bewegung des Hebelarms parallel zu dem Fahrzeug zu ermöglichen, und dass
- der Hebelarm (3) und der untere Arm (2) mittels einer Hauptfeder (4) in Verbindung miteinander sind, wobei mittels dieser Hauptfeder eine relative Bewegung des unteren Arms und des Hebelarms in Bezug zu dem Gelenk (16) beschränkt ist.

2. Übungsgerät gemäß Anspruch 1, **dadurch gekennzeichnet, dass** die Länge des Hebelarms (3) mit einer Einstellungssperre (5) einstellbar ist, welche vorzugsweise eine Feder in Form eines v-Winkels ist.

3. Übungsgerät gemäß Anspruch 1, **dadurch gekennzeichnet, dass** eine Gegenfeder (6) an dem zweiten Ende des Hebelarms angeordnet ist.

4. Übungsgerät gemäß Anspruch 1 oder 3, **dadurch gekennzeichnet, dass** ein Justierungsring (7) an dem zweiten Ende des Hebelarms (3) oder in der Gegenfeder (6) angeordnet ist, um eine freie Länge einer Leine (9), die durch ihn durchläuft, einzustellen.

5. Übungsgerät gemäß Anspruch 1, **dadurch gekennzeichnet, dass** eine gesicherte Verschluss-Einrichtung (10) an dem zweiten Ende der durch den Justierungsring (7) laufenden Leine (9) befestigt ist, wobei die gesicherte Verschluss-Einrichtung folgendes umfasst
- ein Körperteil (21) der Verschluss-Einrichtung, wie zum Beispiel eine Reibungsbuchse, welche eine längliche Aushöhlung (24) hat, die aus Material mit einem hohen Reibungskoeffizienten wie zum Beispiel Gummi hergestellt ist, und
- ein Spulen-Gehäuse (22), das eine längliche Halterung (23) hat,
wobei die längliche Halterung (23) des Spulen-Gehäuses (22) an die Verschluss-Einrichtung in die längliche Aushöhlung (24) des Körperteils (21) eingepasst ist, vorzugsweise vollständig bis zum Boden der Aushöhlung.

6. Übungsgerät gemäß Anspruch 5, **dadurch gekennzeichnet, dass** die längliche Halterung (23) des Spulen-Gehäuses (22) der gesicherten Verschluss-Einrichtung an der Verschluss-Einrichtung in die längliche Aushöhlung (24) des Körperteils (21) hinein mittels einer Festspann-Einrichtung (25), wie zum Beispiel einer Schlitz-Überwurfmutter, festgespannt ist.

7. Übungsgerät gemäß Anspruch 6, **dadurch gekennzeichnet, dass** die Kraftmenge, die zum Öffnen der gesicherten Verschluss-Einrichtung nötig ist, durch die Festspann-Einrichtung (25) einstellbar ist.

8. Übungsgerät gemäß Anspruch 5, **dadurch gekennzeichnet, dass** ein Draht (26) auf eine Spule (27) aufgerollt ist, die in dem Spulen-Gehäuse (22) der gesicherten Verschluss-Einrichtung ist, wobei ein erstes Ende von diesem Draht an einer Achse (28) der Spule (27) angebracht ist und ein zweites Ende an der Leinen-Schleife (12) des Körperteils (21) angebracht ist.

9. Übungsgerät gemäß Anspruch 8, **dadurch gekennzeichnet, dass** eine Anpassungseinrichtung (36), wie zum Beispiel eine Schraube und eine Kupplungsscheibe (37), in Verbindung mit der Achse (28) der Spule (27) der gesicherten Verschluss-Einrichtung ist, wobei mittels dieser Anpassungseinrichtung und Kupplungsscheibe die Geschwindigkeit des Abspulen des Drahts (26) einstellbar ist.

10. Übungsgerät gemäß einem der vorangegangenen Ansprüche 5 bis 9, **dadurch gekennzeichnet, dass** die Spule (27) der gesicherten Verschluss-Einrichtung eine elektrisch leitende Kante (29) hat, an der ein Schlitz (30) angeordnet ist, und dass Elektroden (31, 31') in der Spule (27) angeordnet sind, wobei Spitzen dieser Elektroden in Kontakt miteinander kommen und einen elektrischen Schaltkreis sperren, wenn sich die Position der Spule (27) verändert.

## Revendications

1. Dispositif d'exercice comprenant :
- un corps de fixation (1) qui peut être attaché à un véhicule, tel qu'une bicyclette,
- une barre inférieure (2) qui est attachée, de façon détachable, au corps de fixation (1) par des moyens de fixation (13),
**caractérisé en ce que**
- le dispositif d'exercice comprend un bras de levier (3), lequel est fixé par sa première extrémité au bras inférieur (2) d'une manière articulée au moyen d'une jonction (16), laquelle jonction est agencée pour permettre un déplacement du bras de levier parallèlement au véhicule, et **en ce que**
- le bras de levier (3) et le bras inférieur (2) sont raccordés l'un à l'autre au moyen d'un ressort principal (4), au moyen duquel le déplacement relatif du bras inférieur et du bras de levier par rapport à la jonction (16) est limité.

2. Dispositif d'exercice selon la revendication 1, **caractérisé en ce que** la longueur du bras de levier (3) peut être réglée avec un verrou de réglage (5), lequel est, de préférence, un ressort à inclinaison en V.

3. Dispositif d'exercice selon la revendication 1, **caractérisé en ce qu'**un ressort antagoniste (6) est disposé au niveau de la seconde extrémité du bras de levier.

4. Dispositif d'exercice selon la revendication 1 ou 3, **caractérisé en ce qu'**une bague de réglage (7) est fixée au niveau de la seconde extrémité du bras de levier (3) ou dans le ressort antagoniste (6) pour régler la longueur libre d'une laisse (9) qui se déplace à travers elle.

5. Dispositif d'exercice selon la revendication 1, **caractérisé en ce que** des moyens de blocage de sécurité (10) sont agencés au niveau de la seconde extrémité de la laisse (9) se déplaçant via la bague de réglage (7), les moyens de blocage de sécurité comprenant :
- une partie de corps (21) des moyens de blocage, telle qu'un mandrin à friction, lequel présente une cavité de forme allongée (24) faite d'un matériau présentant un coefficient de friction élevé, tel que du caoutchouc, et
- un boîtier de bobine (22) qui comporte un support de forme allongée (23), de sorte que le support de forme allongée (23) du boîtier de bobine (22) est ajusté dans les moyens de blocage, dans la cavité de forme allongée (24) de la partie de corps (21), de préférence, jusqu'au fond de la cavité.

6. Dispositif d'exercice selon la revendication 5, **caractérisé en ce que** le support de forme allongée (23) du boîtier de bobine (22) des moyens de blocage de sécurité est serré aux moyens de blocage, dans la cavité de forme allongée (24) de la partie de corps (21) à l'aide des moyens de serrage (25), tels qu'un écrou d'accouplement à oreilles.

7. Dispositif d'exercice selon la revendication 6, **caractérisé en ce que** l'intensité de la force nécessaire pour ouvrir les moyens de blocage de sécurité peut être réglée par les moyens de serrage (25).

8. Dispositif d'exercice selon la revendication 5, **caractérisé en ce qu'**un câble (26) est enroulé sur une bobine (27) qui se trouve à l'intérieur du boîtier de bobine (22) des moyens de blocage de sécurité, câble dont une première extrémité est fixée à un axe (28) de la bobine (27) et une seconde extrémité est fixée à la boucle de laisse (12) de la partie de corps (21).

9. Dispositif d'exercice selon la revendication 8, **caractérisé en ce qu'**un moyen de réglage (36), tel qu'une vis, et un plateau d'embrayage (37), est en liaison avec l'axe (28) de la bobine (27) des moyens de blocage de sécurité, moyens de réglage et plateau d'embrayage par l'intermédiaire desquels la vitesse de déroulement du câble (26) peut être réglée.

10. Dispositif d'exercice selon l'une quelconque des revendications précédentes 5 à 9, **caractérisé en ce que** la bobine (27) des moyens de blocage de sécurité possède un bord électriquement conducteur (29), dans lequel se trouve une fente (30), et **en ce que** des électrodes (31, 31') sont disposées dans la bobine (27), électrodes dont les pointes viennent en contact l'une avec l'autre et sont mis en circuit électrique lorsque la position de la bobine (27) varie.
